# EUROPEAN PATENT SPECIFICATION

(11) **EP 1 017 153 B1**
(45) Date of publication and mention of the grant of the patent: **12.07.2006**
(21) Application number: 99204363.8
(22) Date of filing: 17.12.1999
(51) Int. Cl.: H02K 3/24

(54) **Forced convection cooling arrangement for rotary electrical machines**
Kühlvorrichtung mit erzwungener Konvektion für elektrische Drehmachine
Dispositif de refroidissement à convection forcée pour machines électriques tournantes

(30) Priority: 30.12.1998 IT MI982858
(43) Date of publication of application: 05.07.2000
(73) Proprietor: ABB RESEARCH LTD., 8050 Zürich (CH)
(72) Inventor: Bodini, Piero, 20010 Vittuone (MI) (IT); Garavaglia, Marcello, 20100 Milano (IT); Malfa, Enrico, 24059 Zanica (BG) (IT)
(74) Representative: Giavarini, Francesco

(56) References cited:
- EP-A- 0 414 927
- EP-A- 0 645 871
- DE-A- 19 747 759
- GB-A- 724 456
- US-A- 5 323 079
- US-A- 5 977 679
- PATENT ABSTRACTS OF JAPAN vol. 006, no. 238 (E-144), 26 November 1982 (1982-11-26) & JP 57 138832 A (HITACHI SEISAKUSHO KK), 27 August 1982 (1982-08-27)

## Description

The present invention relates to a forced convection cooling arrangement for rotary electrical machines. More particularly, the invention relates to a single-phase forced convection cooling arrangement of the compact type for rotary electrical machines such as for example an electric motor.

Rotary electrical machines are traditionally plagued by significant losses due to the Joule effect in the stator elements (copper and iron) and due to the viscous friction between the surfaces and the fluid that circulates in the space between the rotor and the stator of rotary electrical machines.

This situation worsens as the rotation rate of the machines rises.

Accordingly, it is necessary to provide a cooling system which is capable of dissipating the generated energy and of ensuring that the maximum temperatures reached by the rotor and the stator are such as to avoid degrading the electromechanical performance of the materials that are typically used.

For example, for a permanent-magnet motor the permanent magnets must not reach excessively high temperatures, on penalty of losing or degrading their magnetic properties. The system must also typically work within clearly defined temperature values which are generally rather low in order to have low costs.

The heat exchanger must also be compact and highly efficient.

The problem of removing the heat generated by an electrical machine is currently dealt with in various manners.

The main technique consists in using fins which are struck by a stream of air generated by a fan and are arranged on the shell of the machine or inside it according to the various configurations.

When a fluid is used for cooling, the motor is enclosed with a jacket inside or outside which the fluid is made to pass through appropriately shaped passages. Cooling can affect both the stator, as is usually the case, and the rotor, and in this case cooling generally occurs by means of a static exchanger arranged around said rotor.

The effectiveness of the exchanger is more important in high-speed machines whose dimensions must be compact and in which accordingly the dimensions of the auxiliary components, such as the heat exchanger, cannot exceed certain values.

Two kinds of heat exchanger are generally used in conventional electrical machines.

A first type has a constant cross-section, in which the flow is generally laminar. In order to increase the efficiency of this heat exchanger, it is necessary to increase the speed so as to produce turbulent motion conditions. This entails a significant increase in pressure losses and entails higher pumping costs.

A second type is the one in which the motion is rendered turbulent by inserting appropriate obstacles. This solution has the advantage of increasing heat exchange efficiency for an equal flow-rate of the cooling fluid. Despite the fact that the presence of obstacles increases pressure losses, accordingly requiring once again to use pumping elements capable of propelling the fluid under high pressure differentials, this solution is generally more efficient than the preceding one.

Document GB 724456 relates to a rotary electrical machine with an heat exchanger having tubing elements, which are placed in contact with the outer surface of conductors. The conductors are disposed in two stacks that are mutually separated by a stack of said tubing elements.

Document EP 414927 discloses a fluid-cooler bar winding for an electrical machine stator winding, which comprises a plurality of cooling tubes arranged in radial slots and mutually separated by stacks of conductors elements along a radial direction.

Document DE 19747759 discloses a bundled multi-strand cable for electrical machines, with a central cooling channel to be wound simultaneously with the conductors of the cable.

Document US 5977679 related to a stator provided with a cooling channel runing along the outer circumference of the stator.

The aim of the present invention is to provide a forced convection cooling arrangement for rotary electrical machines which is highly efficient and capable of removing the considerable thermal energy levels generated in the stator and rotor elements of the electric motor.

Within the scope of this aim, an object of the present invention is to provide a forced convection cooling arrangement which is particularly compact and therefore suitable for electric motors which are compact but have a high specific power level.

Another object of the present invention is to provide a forced convection cooling arrangement for motors which allows to remove heat from the regions of the electric motor where it is generated most.

Another object of the present invention is to provide a forced convection cooling arrangement which allows to keep the temperature of the inner face of the stator, which is the most critical one, at an acceptable level in accordance with the characteristics of the materials used.

Another object of the present invention is to provide a forced convection cooling arrangement which also allows to maintain low temperatures on the surface of the rotor.

Not the least object of the present invention is to provide a forced convection cooling arrangement which is highly reliable, relatively easy to manufacture and at competitive costs.

Thus, the present invention provides a cooling arrangement for a rotary electrical machine, according to the claim 1 of the present application.

Further characteristics and advantages of the present invention will become apparent from the description of preferred but not exclusive embodiments of the cooling arrangement according to the invention, illustrated only by way of non-limitative example in the accompanying drawings, wherein:
Figure 1 is a partial schematic plan view of a first embodiment of the cooling arrangement according to the present invention; and
Figure 2 is a partial schematic plan view of a second embodiment of the cooling arrangement according to the present invention.

With reference therefore to the above cited figures, in which identical reference numerals designate identical elements, the cooling arrangement according to the present invention is provided as follows.

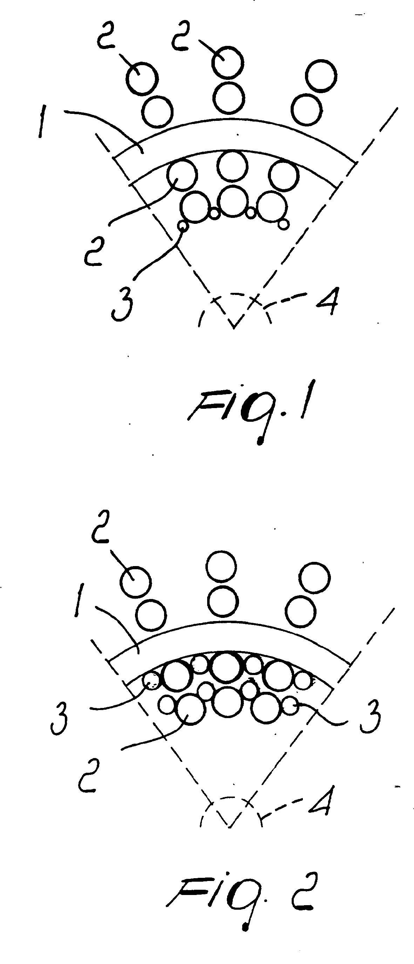

Figure 1 is a view of an embodiment of the cooling arrangement according to the present invention, in which the reference numeral 1 designates the portion of the stator core of the rotary electrical machine. The reference numeral 2 designates copper conductors (for example made of copper) of the stator windings of the rotary electrical machine.

The forced convention cooling arrangement comprises one or more tubing elements 3, which are arranged between the conductors 2 so as to be in contact with the outer surface of the conductors 2.

A cooling liquid flows into said tubing elements that, in a preferred embodiment of the present invention, are connected to collector means (not illustrated) for collecting the cooling fluid circulating into the tubing elements 3.

The collector means comprise preferably a first collector element and a second collector element that can be respectively connected to a first end and a second end of said tubing elements.

Said first and second elements are preferably made of non-conductive material such as for example polyketon or polysulphone resins. In this way, the circulation of eddy currents is avoided, with a remarkable reduction of the dissipated power.

Preferably, the cooling arrangement, according to the invention, comprises pumping means (not shown) which, being operatively connected to said tubing elements 3, ensure forced convection of the cooling !liquid.

According to a first embodiment, the tubing elements 3 of the cooling arrangement are arranged so as to be aligned with the conductors 2 longitudinally along the body of the stator core.

According to this embodiment, by means of the action of the pumping means the cooling liquid enters proximate to one end of the stator core and exits at the opposite end, in practice passing only once at the stator region to be cooled.

According to an alternative embodiment, the tubing elements 3 of the cooling arrangement are arranged in a coiled configuration !longitudinally along the stator body. According to this embodiment as well, the main axis of the tubes is parallel to the conductors 2. Also according to this embodiment of the present invention, the cooling fluid can be pumped at one of the ends of the coil and in practice multiple passes of the fluid occur at the stator region to be cooled.

According to another embodiment, the tubing elements 3 of the cooling arrangement are coupled to the conductors 2 so as to follow their path around the stator core. In practice, the tubing elements 3 can be coupled to the conductors 2, for example by means of banding insulation, and then wound around the stator core together with the conductors that constitute the stator windings.

By using the described configurations, the tubes 3 can be arranged proximate to the surface of the stator that faces the rotor, as shown in Figure 1, or be fully inserted between the rows of conductors 2, as shown in Figure 2.

The proposed solutions allow to remove heat where it is generated and also allow to provide a temperature level on the face of the stator that faces the rotor 4 which allows to maintain lower temperatures on the rotor than obtainable with conventional solution.

Furthermore, cooling arrangement according to the invention is extremely compact and can therefore be used even for compact electrical machines having high specific power levels.

The tubing elements 3 of the cooling arrangement can be made of metallic material, so as to facilitate optimum thermal contact with the surfaces to be cooled, or of electrically nonconducting material, such as for example PTFE (polytetrafluoroethylene).

As an alternative, it is possible to provide tubing elements 3 which have a configuration other than the circular one shown in Figures i and 2 and are such as to substantially fili the space between the individual conductors 2 of the stator 1.

In practice it has been observed that the cooling arrangement according to the invention fully achieves the intended aim. In fact, it allows to maximizing heat exchange efficiency by eliminating heat generated at the interface between the stator and the rotor of an electric motor, though being compact and therefore suitable for use in electrical machines in general having a high specific power level, including compact ones.

The cooling arrangement thus conceived is susceptible of numerous modifications and variations, all of which are within the scope of the inventive concept; all the details may furthermore be replaced with other technically equivalent elements.

In practice, the materials employed, so long as they are compatible with the specific use, as well as the dimensions, may be any according to requirements and to the state of the art.

## Claims

1. A forced convection Cooling arrangement for a rotary electrical machine, comprising:
- an annular stator core (1);
- an inner rotor (4);
- stator windings made of conductors(2) wound along the core, and running axially on the inner side of the core and the outer side of the core;
- tubing elements (3) running axially along the stator core (1) and arranged between the conductors (2), so as to be in contact with the outer surface of said conductors (2);
- a cooling fluid flowing into said tubing elements;
**characterized by** that said tubing elements (3) are aligned circumferentially along the side of the stator (1) that faces the rotor (4), as to be separated from each other by one of said conductors (2).

2. A forced convection cooling arrangement
according to claim 1, **characterized by** the fact that said one or more tubing elements (3) are operatively connected to collector means for collecting said cooling fluid flowing into said tubing elements (3).

3. A forced convection cooling arrangement
according to claim 2, **characterized by** the fact that said collector means comprise a first element and a second element that are respectively connected to a first and a second end of said tubing elements (3).

4. A forced convection cooling arrangement
according to claim 3, **characterized by** the fact that said first element and said second element are made of electrically non-conducting material.

5. A forced convection cooling arrangement, according to one or more of the previous claims, **characterized by** the fact that said one or more tubing elements (3) are operatively connected to pumping means which are suitable to ensure forced convection of said cooling fluid.

6. A forced convection cooling arrangement,
according to claim 1, **characterized in that** said tubing elements are arranged proximate to the surface of the stator that faces the rotor of said electrical machines.

7. A forced convection cooling arrangement,
according to claim 6, **characterized in that** said tubing elements (3) are arc aligned with respect to said conductor longitudinally along the body of the stator of said electrical machine.

8. A forced convection cooling arrangement,
according to claim 6, **characterized in that** said tubing elements (3) are arranged in a coil-like configuration longitudinally along the body of the stator (1) of said electrical machine.

9. A forced convection arrangement , according to claim 8, **characterized in that** said tubing elements (3) are coupled to said conductors (2) along the path around the stator core (1) of said electrical machine.

10. A forced convection cooling arrangement, according to claim 9, **characterized in that** said tubing elements (3) are coupled to said conductors (2) by means of banding insulation.

11. A forced convection cooling arrangement,
according to one or more of the preceding claims, **characterized in that** said tubing elements (3) are made of metallic material.

12. A forced convection cooling arrangement, according to one or more of the claims from 1 to 10, **characterized in that** said tubing elements (3) are made of electrically non-conducting material.

13. A rotary electrical machine **characterized by** the fact of comprising a forced convection cooling arrangement for a rotary electrical machine according to one or more of the previous claims.

## Patentansprüche

1. Zwangskonvektions-Kühlanordnung für eine rotierende elektrische Maschine, die folgende Merkmal aufweist:
- einen kreisförmigen Statorkern (1);
- einen innere Rotor (4);
- Statorwicklungen, die aus Leitern (2) gefertigt sind, die den Kern entlang gewickelt sind, und axial auf der Innenseite des Kerns und der Außenseite des Kerns verlaufen;
- Leitungselemente (3), die axial entlang des Statorkerns (1) verlaufen und zwischen den Leitern (2) angeordnet sind, um mit der Außenoberfläche der Leiter (2) in Kontakt zu sein;
- ein Kühlfluid, das in die Leitungselemente fließt;
**dadurch gekennzeichnet, daß** die Leitungselemente (3) in Umfangsrichtung entlang der Seite des Stators (1) ausgerichtet sind, der dem Rotor (4) gegenüberliegt, um durch einen der Leiter (2) voneinander getrennt zu sein.

2. Zwangskonvektions-Kühlanordnung nach Anspruch 1, **gekennzeichnet durch** die Tatsache, daß das eine oder die mehreren Leitungselemente (3) wirksam mit einer Sammlereinrichtung zum Aufsammeln des Kühlfluids verbunden ist, das in die Leitungselemente (3) strömt.

3. Zwangskonvektions-Kühlanordnung nach Anspruch 2, **gekennzeichnet durch** die Tatsache, daß die Sammlereinrichtungen ein erstes Element und ein zweites Element aufweisen, die jeweils mit einem ersten Ende und einem zweiten Ende der Leitungselemente (3) verbunden sind.

4. Zwangskonvektions-Kühlanordnung nach Anspruch 3, **gekennzeichnet durch** die Tatsache, daß das erste Element und das zweite Element aus einem elektrisch nichtleitenden Material gefertigt sind.

5. Zwangskonvektions-Kühlanordnung nach einem oder mehreren der vorhergehenden Ansprüche, **gekennzeichnet durch** die Tatsache, daß das eine oder die mehreren Leitungselemente (3) wirksam mit Pumpeinrichtungen verbunden sind, die geeignet sind, um eine Zwangskonvektion des Kühlfluids sicherzustellen.

6. Zwangskonvektions-Kühlanordnung nach Anspruch 1, **dadurch gekennzeichnet, daß** die Leitungselemente in der Nähe der Oberfläche des Stators angeordnet sind, der dem Rotor der elektrischen Maschinen gegenüberliegt.

7. Zwangskonvektions-Kühlanordnung nach Anspruch 6, **dadurch gekennzeichnet, daß** die Leitungselemente (3) in bezug auf den Leiter in Längsrichtung entlang des Körpers des Stators der elektrischen Maschine bogenförmig ausgerichtet sind.

8. Zwangskonvektions-Kühlanordnung nach Anspruch 6, **dadurch gekennzeichnet, daß** die Leitungselemente (3) in einer spulenartigen Konfiguration in Längsrichtung entlang des Körpers des Stators (1) der elektrischen Maschine angeordnet sind.

9. Zwangskonvektions-Kühlanordnung nach Anspruch 8, **dadurch gekennzeichnet, daß** die Leitungselemente (3) mit den Leitern (2) entlang dem Weg um den Statorkern (1) der elektrischen Maschine verbunden sind.

10. Zwangskonvektions-Kühlanordnung nach Anspruch 9, **dadurch gekennzeichnet, daß** die Leitungselemente (3) mit den Leitern (2) mittels einer Bandisolierung verbunden sind.

11. Zwangskonvektions-Kühlanordnung nach einem oder mehreren der vorhergehenden Ansprüche, **dadurch gekennzeichnet, daß** die Leitungselemente (3) aus einem metallischen Material gefertigt sind.

12. Zwangskonvektions-Kühlanordnung nach einem oder mehreren der Ansprüche 1 bis 10, **dadurch gekennzeichnet, daß** die Leitungselemente (3) aus einem elektrische nichtleitenden Material gefertigt sind.

13. Rotierende elektrische Maschine, **gekennzeichnet durch** die Tatsache, daß sie eine Zwangskonvektions-Kühlanordnung für eine rotierende elektrische Maschine gemäß einem oder mehreren der vorhergehenden Ansprüche aufweist.

## Revendications

1. Dispositif de refroidissement à convection forcée pour machine électrique rotative comprenant:
- un noyau (1) de stator annulaire;
- un rotor interne (4);
- des enroulements de stator composés de conducteurs (2) enroulés autour du noyau, et courant de manière axiale sur le côté interne du noyau et le côté externe du noyau;
- des éléments de tubage (3) courant de manière axiale le long du noyau (1) de stator et agencés entre les conducteurs (2), afin d'être en contact avec la surface externe desdits conducteurs (2);
- un flux de refroidissement s'écoulant dans lesdits éléments de tubage;
**caractérisé en ce que** lesdits éléments de tubage (3) sont alignés de manière circonférentielle le long du côté du stator (1) qui fait face au rotor (4), afin d'être séparés les uns des autres par l'un parmi lesdits conducteurs (2).

2. Dispositif de refroidissement à convection forcée selon la revendication 1, **caractérisé en ce que** ledit un ou plusieurs parmi les éléments de tubage (3) sont reliés de manière fonctionnelle à des moyens collecteurs destinés à collecter ledit fluide de refroidissement s'écoulant dans lesdits éléments de tubage (3).

3. Dispositif de refroidissement à convection forcée selon la revendication 2, **caractérisé en ce que** lesdits moyens collecteurs comprennent un premier élément et un second élément qui sont respectivement reliés à une première et une seconde extrémité desdits éléments de tubage (3).

4. Dispositif de refroidissement à convection forcée selon la revendication 3, **caractérisé en ce que** ledit premier élément et ledit second élément sont en un matériau électriquement non conducteur.

5. Dispositif de refroidissement à convection forcée selon une ou plusieurs des revendications précédentes, **caractérisé en ce que** lesdits un ou plusieurs éléments de tubage (3) sont reliés de manière fonctionnelle à des moyens de pompage qui sont appropriés pour garantir une convection forcée dudit fluide de refroidissement.

6. Dispositif de refroidissement à convection forcée selon la revendication 1, **caractérisé en ce que** lesdits éléments de tubage sont agencés à proximité de la surface du stator qui fait face au rotor desdites machines électriques.

7. Dispositif de refroidissement à convection forcée selon la revendication 6, **caractérisé en ce que** lesdits éléments de tubage (3) sont alignés en arc de cercle par rapport audit conducteur de manière longitudinale le long du corps du stator de ladite machine électrique.

8. Dispositif de refroidissement à convection forcée selon la revendication 6, **caractérisé en ce que** lesdits éléments de tubage (3) sont agencés selon une configuration en bobine de manière longitudinale le long du corps du stator (1) de ladite machine électrique.

9. Dispositif de refroidissement à convection forcée selon la revendication 8, **caractérisé en ce que** lesdits éléments de tubage (3) sont couplés audit conducteur (2) le long du trajet autour du noyau (1) de stator de ladite machine électrique.

10. Dispositif de refroidissement à convection forcée selon la revendication 9, **caractérisé en ce que** lesdits éléments de tubage (3) sont couplés auxdits conducteurs (2) au moyen d'une isolation de frettage.

11. Dispositif de refroidissement à convection forcée selon une ou plusieurs des revendications précédentes, **caractérisé en ce que** lesdits éléments de tubage (3) sont en un matériau métallique.

12. Dispositif de refroidissement à convection forcée selon une ou plusieurs parmi les revendications 1 à 10, **caractérisé en ce que** lesdits éléments de tubage (3) sont en un matériau électriquement non conducteur.

13. Machine électrique rotative **caractérisée en ce qu'**elle comprend un dispositif de refroidissement à convection forcée pour une machine électrique rotative selon une ou plusieurs des revendications précédentes.
